# EUROPÄISCHE PATENTANMELDUNG

(11) **EP 1 798 203 A1**
(43) Veröffentlichungstag der Anmeldung: **20.06.2007**
(21) Anmeldenummer: 06025127.9
(22) Anmeldetag: 05.12.2006
(51) Int. Cl.: C02F 1/04, C02F 1/20, C02F 101/32

(54) **Verfahren zur Prozesswasseraufbereitung in Olefinanlagen**

(30) Priorität: 15.12.2005 DE 102005060092
(71) Anmelder: Linde Aktiengesellschaft, 65189 Wiesbaden (DE)
(72) Erfinder: Schmigalle, Holger, 82515 Wolfratshausen (DE)

(57) **Zusammenfassung**

Es wird ein Verfahren zur Prozesswasseraufbereitung in Olefinanlagen mit mindestens einem Prozessdampferzeuger (W1) und mindestens einem Spaltofen (O) zur Dampfspaltung von Kohlenwasserstoffen beschrieben. Es wird vorgeschlagen, das Prozesswasser zur Prozesswasserstrippung dem Prozessdampferzeuger (W1) aufzugeben und das verdampfte Prozesswasser dem Spaltofen (O) zuzuführen. Der Prozessdampferzeuger (W1) kann einer Strippkolonne (T1) nachgeschaltet sein, wobei während der Reinigung der Strippkolonne (T1) das Prozesswasser unter Umgehung (B) der Strippkolonne (T1) direkt dem Prozessdampferzeuger (W1) zur Prozesswasserstrippung zugeführt wird.

## Beschreibung

Die Erfindung betrifft ein Verfahren zur Prozesswasseraufbereitung in Olefinanlagen mit mindestens einem Prozessdampferzeuger und mindestens einem Spaltofen zur Dampfspaltung von Kohlenwasserstoffen.

Bei der Prozesswasseraufbereitung in Olefinanlagen besteht üblicherweise mindestens ein Aufbereitungsschritt in der Prozesswasserstrippung. Dabei tritt häufig das Problem auf, dass das Prozesswassersystem, insbesondere die Strippkolonne, ein starkes Foulingverhalten aufweist. Das Fouling wird hauptsächlich durch Polymerisation von ungesättigten Kohlenwasserstoffkomponenten verursacht. Aufgrund des starken Foulings können oft gewünschte Laufzeiten einer Olefinanlage nicht eingehalten werden oder es sind aufwändige Apparateverdoppelungen notwendig. Auch kann die Abwassermenge stark steigen und die Abwasserqualität beeinträchtigt werden, so dass erhebliche Zusatzinvestitionen erforderlich werden können.

Der vorliegenden Erfindung liegt die Aufgabe zugrunde, ein Verfahren der eingangs genannten Art so auszugestalten, dass das Foulingproblem bei Olefinanlagen vermindert wird.

Diese Aufgabe wird erfindungsgemäß dadurch gelöst, dass das Prozesswasser zur Prozesswasserstrippung dem Prozessdampferzeuger aufgegeben wird und das verdampfte Prozesswasser dem Spaltofen zugeführt wird.

In einer vorteilhaften Variante der Erfindung wird das Prozesswasser nach einer vorgeschalteten Strippung in einer Strippkolonne zur weiteren Prozesswasserstrippung dem Prozessdampferzeuger zugeführt. Durch die zusätzliche Strippung des Prozesswassers im Prozessdampferzeuger kann die Abwasserqualität aufgrund des zusätzlichen Reinigungseffekts im Prozessdampferzeuger wesentlich verbessert werden.

Zweckmäßigerweise wird das Prozesswasser während einer Reinigungsphase, in der die vorgeschaltete Strippkolonne gereinigt wird, unter Umgehung der Strippkolonne direkt dem Prozessdampferzeuger zugeführt. Auf diese Weise wird gewährleistet, dass die Anlage während der aufgrund von Foulingproblemen notwendigen Reinigung der Strippkolonne weiter betrieben werden kann. Die erforderliche Prozesswasserstrippung erfolgt in diesem Fall ersatzweise im Prozessdampferzeuger.

Gemäß einer bevorzugten Ausführungsform der Erfindung wird das nicht verdampfte Prozesswasser aus einem z.B. als Behälter ausgebildeten Prozesswasserabscheider abgeschlämmt. Der von diesem Behälter abgezogene Wasserüberschuss wird schließlich einer Abwasserreinigungsanlage zugeführt.

Eine besonders bevorzugte Variante der Erfindung sieht vor, dass die Strippkolonne und der Prozesswasserabscheider bei denselben Prozesstemperaturen und denselben Prozessdrücken betrieben werden. Bei einer anderen vorteilhaften Variante wird die Strippkolonne bei einem tieferen Druck und einer tieferen Temperatur betrieben als der Prozesswasserabscheider. In diesem Fall wird das Prozesswasser vor der Aufgabe zum Prozessdampferzeuger angewärmt.

Es kann auch auf die Strippkolonne vollständig verzichtet werden und das Prozesswasser direkt dem Prozessdampferzeuger zur Prozesswasserstrippung zugeführt werden. In dieser Variante sollte der Prozessdampferzeuger mit Reserve ausgelegt werden, um eine Reinigung des Prozessdampferzeugers bei Foulingproblemen ohne Abschalten der Anlage zu ermöglichen.

Ein wesentlicher Vorteil der Erfindung besteht darin, dass die Strippkolonne gereinigt werden kann ohne dass die Anlage heruntergefahren werden muss. Die gewünschten Abwassermengen und Abwasserspezifikationen können auch während der Abstellung der Strippkolonne eingehalten werden. Dabei kann das erfindungsgemäße System in Verbindung mit einem Niederdruckstripper (ca. 1,5 bar), einem Hochdruckstripper (ca. 8 bar) oder auch völlig ohne Stripper ausgeführt werden. Im letzteren Fall wird das Prozesswasser direkt zum Spaltofen gestrippt. Ein weiterer Vorteil ergibt sich dadurch, dass durch die Hintereinanderschaltung von Strippstufen eine höherwertige Abwasserspezifikation bezüglich volaltiler Komponenten eingehalten werden kann. Dadurch kann ein in herkömmlichen Systemen eventuell notwendiger Abwasserstripper entfallen.

Im folgenden soll die Erfindung anhand von in den Figuren schematisch dargestellten Ausführungsbeispielen näher erläutert werden.

Es zeigen
- Figur 1: eine Anlage mit einem Hochdruckstripper
- Figur 2: eine Anlage mit einem Niederdruckstripper
- Figur 3: ein System ohne Strippkolonne

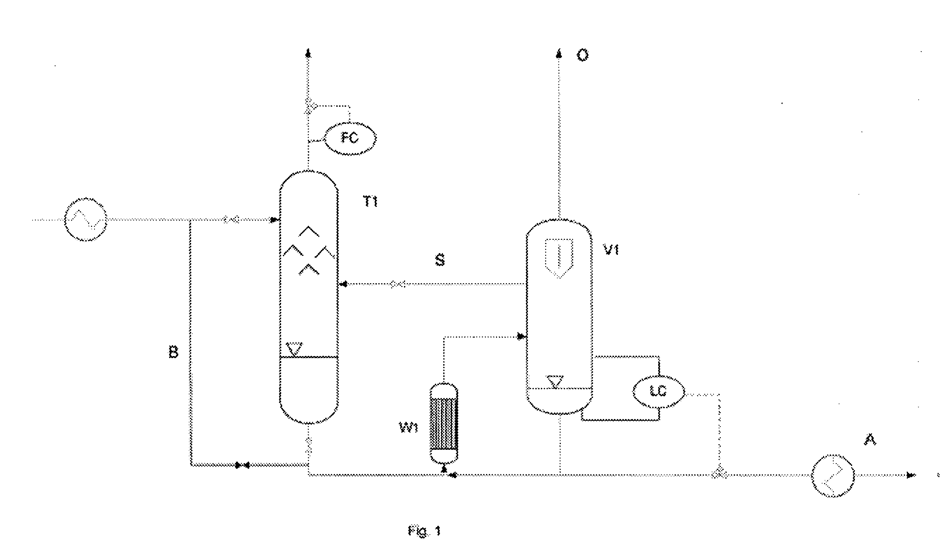

Bei der in Figur 1 dargestellten Variante wird das Prozesswasser in einer Hochdruckstrippkolonne T1 gestrippt. Diese Strippkolonne T1 ist so aufgestellt, dass das Prozesswasser von der Strippkolonne T1 zum Prozessdampferzeuger W1, der als herkömmlicher Verdampfer ausgebildet ist, als auch von dem nachgeschalteten Behälter V1 zum Prozessdampferzeuger W1 ohne weitere Pumpen gefördert werden kann. Im Prozessdampferzeuger W1 wird das Prozesswasser verdampft und über den Behälter V1 zu den Spaltöfen O gefahren. Ein Teil des Dampfes wird zum Strippen über eine Leitung S in die Strippkolonne T1 zurückgeführt. Ein Wasserüberschuss wird vom Behälter V1 zur Abwasseraufbereitung abgeschlämmt. Das überschüssige Wasser wird über Leitung A zu einer nichtdargestellten Abwasserreinigungsanlage geleitet. Im Falle einer notwendigen Reinigung der Strippkolonne T1 wird über eine Bypassleitung B das Prozesswasser direkt zum Prozessdampferzeuger W1 geführt. Durch den weiter vorhandenen Strippeffekt im Prozessdampferzeuger W1 kann die gewünschte Abwassermenge und Abwasserqualität weiterhin erreicht werden. Außerhalb der Reinigungsphase, wenn also die Strippkolonne T1 und der Prozessdampferzeuger W1 hintereinander geschaltet sind, wird eine wesentliche Verbesserung der Abwasserqualität gegenüber herkömmlichen Verfahren erreicht. In dem vorliegenden Ausführungsbeispiel sind die Prozessbedingungen der Strippkolonne T1 und des Behälters V1 gleich. Die Temperatur beträgt ca. 180 Grad Celsius und der Druck ca. 8 bar.

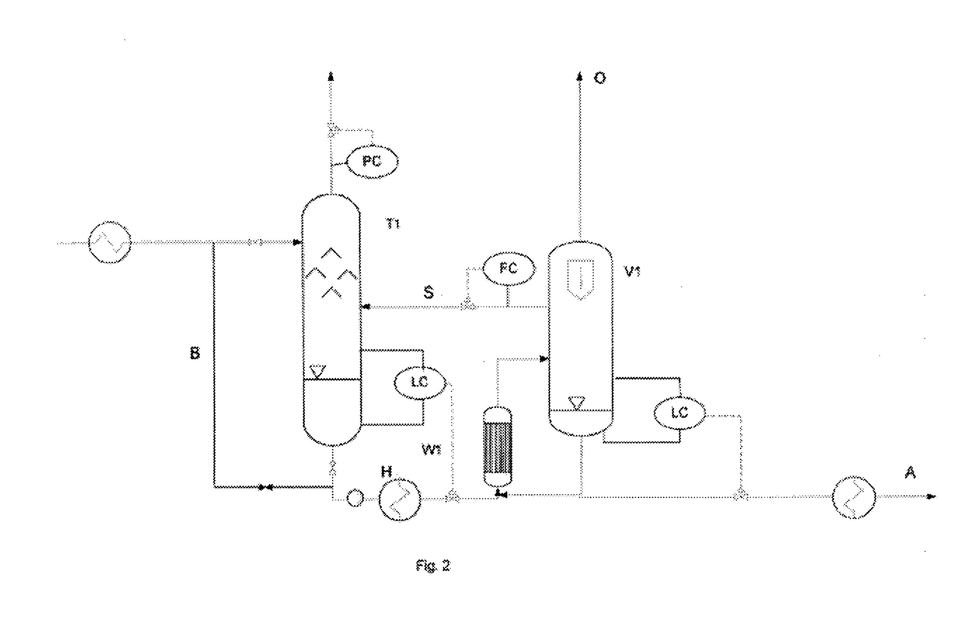

Figur 2 zeigt das Fließbild einer Prozesswasseraufbereitung mit einer Niederdruckstrippkolonne T1, die bei tieferem Druck (1,5 bar) und tieferer Temperatur (120 Grad Celsius) arbeitet. Das gestrippte Prozesswasser wird von der Strippkolonne T1 zum Prozessdampferzeuger W1 über einen zusätzlichen Anwärmer H gepumpt, während es von dem Behälter V1 zum Prozessdampferzeuger W1 ohne Pumpen umläuft. Im Prozessdampferzeuger W1 wird das Prozesswasser verdampft und über den Behälter V1 zu den Öfen O gefahren. Ein Teil des Dampfes wird über Leitung S zur Strippkolonne T1 geführt und dort zum Strippen verwendet. Ein Wasserüberschuss wird von dem Behälter V1 zur Abwasseraufbereitung abgeschlämmt. Der Wasserüberschuss wird über Leitung A einer nicht gezeigten Abwasserreinigungsanlage zugeführt. Im Falle einer notwendigen Reinigung der Strippkolonne T1 wird über eine Bypassleitung B das Prozesswasser direkt zum Prozessdampferzeuger W1 gepumpt. In diesem Ausführungsbeispiel sind die Prozessbedingungen der Strippkolonne T1 und dem Behälter V1 verschieden.

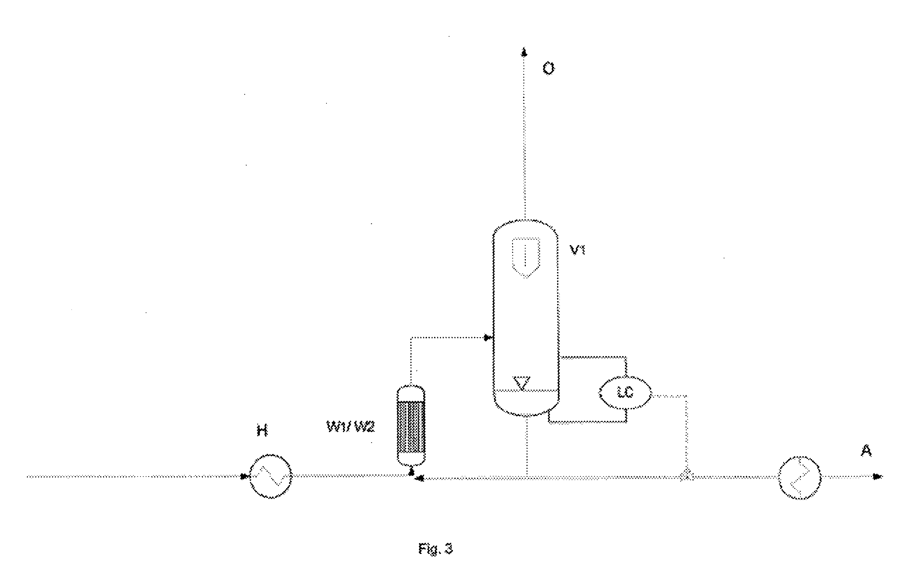

In der in Figur 3 gezeigten Variante wird auf die Strippkolonne vollständig verzichtet. Das Prozesswasser wird direkt zum Prozessdampferzeuger W1 gefahren. Von dem Behälter V1 gelangt das Prozesswasser über Naturumlauf zum Prozessdampferzeuger W1 zurück. Im Prozessdampferzeuger W1 wird das Prozesswasser verdampft und über den Behälter V1 zu den Öfen O gefahren. Ein Wasserüberschuss wird von dem Behälter V1 zur Abwasseraufbereitung abgeschlämmt und über Leitung A zu einer Abwasserreinigungsanlage geführt. In dieser Variante muss der Prozessdampferzeuger W1 mit Reserve W2 ausgelegt werden, damit eine Reinigung ohne Abschalten der Anlage möglich ist.

## Patentansprüche

1. Verfahren zur Prozesswasseraufbereitung in Olefinanlagen mit mindestens einem Prozessdampferzeuger (W1) und mindestens einem Spaltofen (O) zur Dampfspaltung von Kohlenwasserstoffen, **dadurch gekennzeichnet, dass** das Prozesswasser zur Prozesswasserstrippung dem Prozessdampferzeuger (W1) aufgegeben wird und das verdampfte Prozesswasser dem Spaltofen (O) zugeführt wird.

2. Verfahren nach Anspruch 1, **dadurch gekennzeichnet, dass** das Prozesswasser nach einer vorgeschalteten Strippung in einer Strippkolonne (T1) zur weiteren Prozesswasserstrippung dem Prozessdampferzeuger (W1) aufgegeben wird.

3. Verfahren nach Anspruch 1 oder 2, **dadurch gekennzeichnet, dass** das Prozesswasser während einer Reinigungsphase, in der eine dem Prozessdampferzeuger (W1) vorgeschaltete Strippkolonne (T1) gereinigt wird, unter Umgehung der Strippkolonne (T1) direkt dem Prozessdampferzeuger (W1) aufgegeben wird.

4. Verfahren nach einem der Ansprüche 1 bis 3, **dadurch gekennzeichnet, dass** das verdampfte Prozesswasser einem dem Spaltofen (O) vorgeschalteten Behälter (V1) zum Abschlämmen von Wasserüberschuss zugeführt wird.

5. Verfahren nach Anspruch 4, **dadurch gekennzeichnet, dass** die Strippkolonne (T1) und der Behälter (V1) zum Abschlämmen von Wasserüberschuss bei denselben Prozesstemperaturen und denselben Prozessdrücken betrieben werden.

6. Verfahren nach Anspruch 4, **dadurch gekennzeichnet, dass** die Strippkolonne (T1) bei tieferem Druck und tieferer Temperatur betrieben wird als der Behälter (V1) zum Abschlämmen des Wasserüberschusses und das Prozesswasser vor Aufgabe zum Prozessdampferzeuger (W1) angewärmt wird.

7. Verfahren nach einem der Ansprüche 1 bis 6, **dadurch gekennzeichnet, dass** das Prozesswasser ohne Vorschaltung einer Strippkolonne (T1) direkt dem Prozessdampferzeuger (W1) zur Prozesswasserstrippung zugeführt wird.
